# EUROPÄISCHE PATENTSCHRIFT

(11) **EP 4 103 496 B1**
(45) Veröffentlichungstag und Bekanntmachung des Hinweises auf die Patenterteilung: **30.04.2025**
(21) Anmeldenummer: 21706156.3
(22) Anmeldetag: 04.02.2021
(51) Int. Cl.: B65G 47/82, B07C 5/14, B27B 31/08

(54) **VORRICHTUNG ZUM SORTIEREN VON STÄMMEN**
DEVICE FOR SORTING TRUNKS
DISPOSITIF DE TRI DE TRONCS

(30) Priorität: 13.02.2020 AT 501112020
(43) Veröffentlichungstag der Anmeldung: 21.12.2022
(73) Patentinhaber: HÄUPL, Friedrich, 4880 St. Georgen im Attergau (AT)
(72) Erfinder: HÄUPL, Friedrich, 4880 St. Georgen im Attergau (AT)
(74) Vertreter: Hübscher & Partner Patentanwälte GmbH
(86) Internationale Anmeldenummer: PCT/AT2021/060041
(87) Internationale Veröffentlichungsnummer: WO 2021/159159

(56) Entgegenhaltungen:
- EP-A1- 1 790 599
- CN-U- 209 109 632
- DE-A1- 102006 015 065
- GB-A- 529 543

## Beschreibung

### Technisches Gebiet

Die Erfindung bezieht sich auf eine Vorrichtung zum Sortieren von Stämmen, nämlich Rundholzstämmen, mit einer, Mitnehmer aufweisenden, Fördereinrichtung sowie mit entlang der Fördereinrichtung angeordneten Ausstoßern zum gezielten Abwurf der Stämme von der Fördereinrichtung in Rundholzmagazine in Abhängigkeit von Signalen einer übergeordneten Steuerung, wobei je wenigstens zwei mittels einer Achse untereinander antriebsverbundenen Ausstoßerpaaren ein gemeinsamer Drehantrieb zugehört.

### Stand der Technik

Eine Vorrichtung der eingangs geschilderten Art ist aus der CN 209 109 632 U bekannt. Diese Druckschrift offenbart eine Vorrichtung mit den Merkmalen des Oberbegriffs des Anspruchs 1.

Bei der Sortierung z.B. von Rundholz in Sägewerken hat sich in den letzten Jahrzehnten ein Längstransport der Rundhölzer auf einer Fördereinrichtung, nämlich einer Förderkette, mit Mitnehmern und mit unterhalb des Vorlaufes und oberhalb des Rücklaufes der Förderkette angeordneten, sogenannten w - förmigen Ausstoßern durchgesetzt, welche an dafür vorgesehenen Positionen entlang der Fördereinrichtung angeordnet sind für ein Abstoßen der Rundhölzer von der Förderkette sorgen, die in weiterer Folge sortiert in entsprechenden Rundholzmagazinen zwischengelagert werden. Ein derartiger w - förmiger Ausstoßer bildet ein Ausstoßerpaar. Mit beispielsweise zwei dieser in Förderrichtung beabstandeten Ausstoßerpaare können die Stämme, in Förderrichtung der Fördereinrichtung gesehen, gleichermaßen zur linken wie zur rechten Seite in Rundholzmagazine abgeworfen werden, wobei je wenigstens zwei mittels einer Welle untereinander antriebsverbundenen Ausstoßerpaare je einer Abwurfzone zugeordnet sind. Ein Ausstoßerpaar besteht aus zwei gebogenen Ausstoßerschenkeln, die einerends miteinander verbunden sind und die im Verbindungsbereich gemeinsam um eine förderrichtungsparallele Achse schwenkverstellbar gelagert sind, wobei die zwei gebogenen Ausstoßerschenkel derart ausgebildet sind, dass sie bei einer Schwenkverstellung der Welle mit dem Drehantrieb den Vorlauf der Fördereinrichtung wechselweise derart umgreifen können, dass ein Stamm entweder nach rechts oder nach links von der Fördereinrichtung abgestoßen wird.

Durch den vermehrten, weltweiten Einsatz dieser Technik und durch die mit den Prinzipien der Rationalisierung und Kostenreduktion einhergehenden Leistungssteigerungen haben sich bei den bisherigen mechanischen und elektrischen Lösungen Schwachstellen und Grenzen geoffenbart, die mit der gegenständlichen Erfindung beseitigt, sowie mit ihr die Möglichkeiten weiterer Leistungssteigerung gepaart mit störungsfreiem Ablauf und besserer Prozessqualität, Energieeinsparung und CO₂ - Emissionsreduktion geschaffen werden.

Eine bekannte Einrichtung zum Sortieren von Stämmen mit einer seitlich kippbaren Fördervorrichtung, die über Zugmittel entlang von Gleitbahnen bewegte Mitnehmer aufweist, ist aus der DE 2 014 857 A bekannt. Bei dieser Lösung werden die Mitnehmer an der Abwurfstelle gekippt, wozu den Gleitbahnen Auflaufkurvenstücke zugeordnet sind, mit denen die Bewegungsbahn der Mitnehmer aus einer Förderebene in eine einseitig aus der Förderebene abgehobene Abwurfstellung verlagerbar ist, wobei die Steuerung der Auflaufkurvenstücke in Abhängigkeit von einer Messvorrichtung für Dimensionen der Sortiergegenstände erfolgt. Eine andere Vorrichtung, bei der die Mitnehmer als auf der Führungsbahn abrollende Laufwägen mit einem Rundholzlagerbock ausgebildet sind, der an der vorbestimmten Stelle zwecks Abwurfs des getragenen Rundholzes abkippbar ist, offenbart die DE 30 24 699 A1.

Als nachteilig hat sich bei bekannten Vorrichtungen folgendes erwiesen. Es erfolgt oft ein ungenauer Abwurf der Stämme. Da der übliche, konventionelle Drehantrieb der Ausstoßer mittels Motor Getriebe und Kupplung erfolgt, ergibt sich im Zusammenspiel dieser Komponenten ein unvermeidbares und auch notwendiges Spiel. Im Zusammenhang mit den gegebenen Trägheits- und Bremsmomenten kann ein von einem Steuerprogramm vorgegebenes exaktes, elektrisches oder elektronisches Signal nicht in eine ebenso exakte Bewegung der Ausstoßer umgesetzt werden, womit ungenauer und streuender Abwurf systemimmanent ist. Aufgrund des seitlich zur Zugrichtung labilen Kettenlaufes kann es zu ungewolltem Absturz von Stämmen von der Fördereinrichtung kommen, was eine begrenzte Arbeitsgeschwindigkeit und Leistung der Vorrichtung zur Folge hat.

Eine mögliche Fördergeschwindigkeit der Fördereinrichtung liegt beispielsweise bei 3 Meter pro sec [m/s]. Ausstoßer müssen bei bekannten Anlagen Fliehkreisgeschwindigkeiten von 2,2 [m/s] erreichen. Das Spiel im Antriebsstrang der drehmomentübertragenden Bauteile verursacht eine Streuung der Ausstoßeraufschlagzeit der Größenordnung von 0,1s, was zu einem ungeordneten Abwurf der Stämme führen kann. Weil das verfrühte oder verspätete Ausstoßen nicht nur zu einem ebenso verschobenen Abwurf in die Rundholzmagazine führt, sondern auch einen Drehimpuls um eine Vertikalachse verursacht, was eine ungeordnete Ablage der Stämme in den Magazinfächern und damit eine Verklausung der Magazinfächer zur Folge haben kann. Ein Regelabwurf mit der Toleranz von +- 5cm ist für einen Abtransport der Stämme mit einem Bagger aus dem Rundholzmagazin deshalb wichtig, weil der geordnete Inhalt der Box die Voraussetzung für eine störungsfreie Entnahme und Stapelung bis 10 Meter Höhe auf dem gegenüberliegenden Vorratspolter ist. Insbesondere für eine angestrebte vollautonome Arbeitsweise eines Flurförderers.

Aus der DE 102013203242 A1 sind Einrichtungen zur Handhabung von Gegenständen bekannt, die der Erzeugung einer definierten, typ- bzw. größenabhängigen Anordnung von Gegenständen, insbesondere Stückgut, in einer Ebene dienen. Es handelt sich um Gruppiereinrichtungen zur Erzeugung von Gruppenanordnungen bestimmt geometrisch geformter Gegenstände, beispielsweise im Bereich der Getränkeindustrie, wo eine bestimmte Anzahl an befüllten Getränkebehältnissen für eine Verpackung zu Gebinden zusammengefasst werden. Grundsätzlich werden entsprechende Einrichtungen überall dort eingesetzt, wo Gegenstände mit definierten Abmessungen und Formen bereit- bzw. hergestellt werden und anschließend für einen Transport oder Versand zu verpacken und zu gruppieren sind.

### Darstellung der Erfindung

Der Erfindung liegt somit die Aufgabe zugrunde, eine Vorrichtung der eingangs geschilderten Art zu schaffen, mit der die Abwurfgenauigkeit von Stämmen von einer Fördereinrichtung in Rundholzmagazine und die Verfügbarkeit der Anlage selbst verbessert wird.

Die Erfindung löst die gestellte Aufgabe dadurch, dass der Drehantrieb ein Torquemotor ist, dessen Rotor unmittelbar starr mit der Achse verbunden ist und dessen Stator bezüglich der Fördereinrichtung drehfest angeordnet ist, wobei die Ausstoßer mit dem Drehantrieb an der Fördereinrichtung angeordnet sind, wobei insbesondere einerends der Achse der Torquemotor und anderends der Achse ein Lagerbock an der Fördereinrichtung befestigt ist und dass der Rotor des Torquemotors antriebsseitig direkt an den unverminderten Torsionsquerschnitt der Achse angeflanscht ist und dass die motorseitige Lagerung des Rotors und damit der Achse vorzugsweise über ein Zapfenlager erfolgt, das zwischen einem gehäusefesten Zapfen und einer rotorinnenumfangsseitigen Lageraufnahme des Rotors angeordnet ist.

Damit wird ein unvergleichbar besseres Arbeitsergebnis bei höherer Sortiergeschwindigkeit erzielt. Wegen der torsionsmäßigen Nulltoleranz im Antriebsstrang kann die Abwurfgenauigkeit von Stämmen von einer Fördereinrichtung in Rundholzmagazine wesentlich verbessert werden. Insbesondere wird mit einer höheren Verfügbarkeit der Anlage selbst der nachfolgende Arbeitsprozess mit Flurfördergeräten wesentlich erleichtert, da die Stämme fehlerfrei in den Magazinen abgelegt werden können.

Besonders einfache Konstruktionsverhältnisse ergeben sich dadurch, dass die Ausstoßer mit dem Drehantrieb an der Fördereinrichtung angeordnet sind, wobei insbesondere einerends der Achse der Torquemotor mit einem Festlager und anderends der Achse ein Lagerbock mit einem Loslager an der Fördereinrichtung befestigt ist. Dabei ist der Rotor des Torquemotors antriebsseitig direkt an den unverminderten Torsionsquerschnitt der Achse angeflanscht und damit robust und toleranzfrei verbunden, womit die magnetische Drehbewegung spielfrei in den Ausstoßimpuls umgesetzt werden kann. Die motorseitige Lagerung des Rotors und damit der Achse erfolgt über ein Zapfenlager, das zwischen einem gehäusefesten Zapfen und einer rotorinnenumfangsseitigen Lageraufnahme des Rotorkörpers angeordnet ist.

Unter einem Torquemotor wird ein hochpoliger, elektrischer Direktantrieb aus der Gruppe der Langsamläufer verstanden. Torquemotoren weisen sehr hohe Drehmomente bei relativ kleinen Drehzahlen auf. Sonderformen sind beispielsweise Schwenkmotoren, welche keine 360°-Drehung vollführen. Ein Torquemotor kann als ein auf hohe Drehmomente optimierter, Servomotor betrachtet werden und kann als Außenläufer oder als Innenläufer ausgebildet sein. Das große Antriebsmoment ermöglicht große Beschleunigungen und erlaubt hohe Antriebssteifigkeiten, da kein Verdrehspiel im erfindungsgemäßen Antriebsstrang der Ausstoßer gegeben ist.

Um den Torquemotor exakt steuern und somit einen gewünschten Ausschwenkwinkel der Ausstoßer sowie eine sichere Rückstellung vorgeben zu können, empfiehlt es sich, wenn ihm zur Bestimmung der Rotordrehlage ein den Drehwinkel zwischen Rotor und Stator messender Drehwinkelsensor zugehört. Aufgrund des Funktionsprinzips des Torquemotor kommt eine erfindungsgemäße Vorrichtung ohne mechanische, verschleißbehaftete Bremse aus, die durch das systemeigene Stillstand- bzw. Bremsmoment des Torquemotors bei Umpolung in ausreichender Größe ersetzt wird. Die für einen exakten Abwurf wichtige Nullposition kann mit Hilfe der Daten des Positionssensors jederzeit punkt- und wiederholgenau angefahren werden. Vorzugsweise werden die Stämme drehimpulsfrei, also ohne Aufprägung eines Drehimpulses um die Stammachse, mit den Ausstoßern von der Fördereinrichtung abgestoßen, was insbesondere auch durch den Wegfall von Zahnleisten in der Abstoßzone gewährleistet werden soll, womit dem in das Magazin abrutschenden Stamm auch beim Abrutschen kein Drehimpuls aufgeprägt wird.

Zwecks Bestimmung eines exakten Auslösezeitpunktes für den Drehantrieb und damit der Ausstoßer, kann der Fördereinrichtung zur Bestimmung einer Stammposition auf der Fördereinrichtung wenigstens ein Positionssensor zugehören.

Von besonderem Vorteil ist es, wenn der Innenraum eines Gehäuses des Torquemotors zur Schmierung und Temperierung mit einem Fluid, insbesondere mit einem Trafoöl, gefüllt ist und wenn das Gehäuse zur Kühlung gegebenenfalls mit Kühlrippen ausgestattet ist. Damit wird eine leicht zu temperierende Vorrichtung geschaffen, die mit besonders wenig beweglichen Teilen auskommt und leicht gewartet werden kann.

Besonders robuste und platzsparende Verhältnisse ergeben sich für die Fördereinrichtung, wenn diese einen liegenden I-Träger mit einem zwei Gurte verbindenden Verbindungssteg und eine die Mitnehmer tragende Förderkette umfasst, wobei Vorlauf und Rücklauf der Förderkette oberhalb des Drehantriebes angeordnet sind. Eine derartig ausgestaltete Fördereinrichtung ist aber nicht auf eine Verwendung mit dem erfindungsgegenständlichen Drehantrieb beschränkt. Allerdings ergibt sich im Zusammenhang mit der Erfindung eine besonders kompakte Konstruktion mit geringer Bauhöhe. Diese Fördereinrichtung schafft den nötigen Platz zur optimalen Positionierung der Ausstoßvorrichtung mit Ausstoßern, Drehantrieb und Achse und seine freizugängliche Montage- und Wartungsmöglichkeit.

Sind Vorlauf und Rücklauf der Förderkette in einem von den Gurten aufgespannten Raum geführt, wobei der Vorlauf auf einer Seite in einem Vorlaufraum und der Rücklauf auf der anderen Seite des Verbindungssteges in einem Rücklaufraum geführt ist, so ergeben sich bei kleinem Fördererquerschnitt zudem besonders robuste und gewichtssparende Konstruktionsverhältnisse, da alle Kräfte vom I-Träger abgetragen werden können. Durch Verwendung eines liegenden I-Trägers als Träger der gesamten Fördereinrichtung ist es möglich Vor- und Rücklauf auf engstem Raum mit genauester Führung der Mitnehmer in schlag- und belastungsresistenter Form mit günstigen Mitteln einfach herzustellen.

Dabei kann der Vorlaufraum seitlich der Förderkette mit Führungsschienen für die Mitnehmer bildenden Profilen ausgestattet sein. Die Förderkette verläuft zwischen den Profilen und die Mitnehmer laufen oder gleiten auf den Profilen. Die Profile und/oder die Gurte sorgen zudem gegebenenfalls für eine seitliche Führung der Mitnehmer, was die Laufruhe der Fördereinrichtung erheblich verbessert.

Der Rücklaufraum kann mit einer zwischen den Gurten angeordneten Gleitführung für die Mitnehmer abgeschlossen sein, wobei die Mitnehmer auf der Gleitführung laufen, womit ein Durchhängen des Rücklaufes vermieden werden kann.

### Kurze Beschreibung der Erfindung

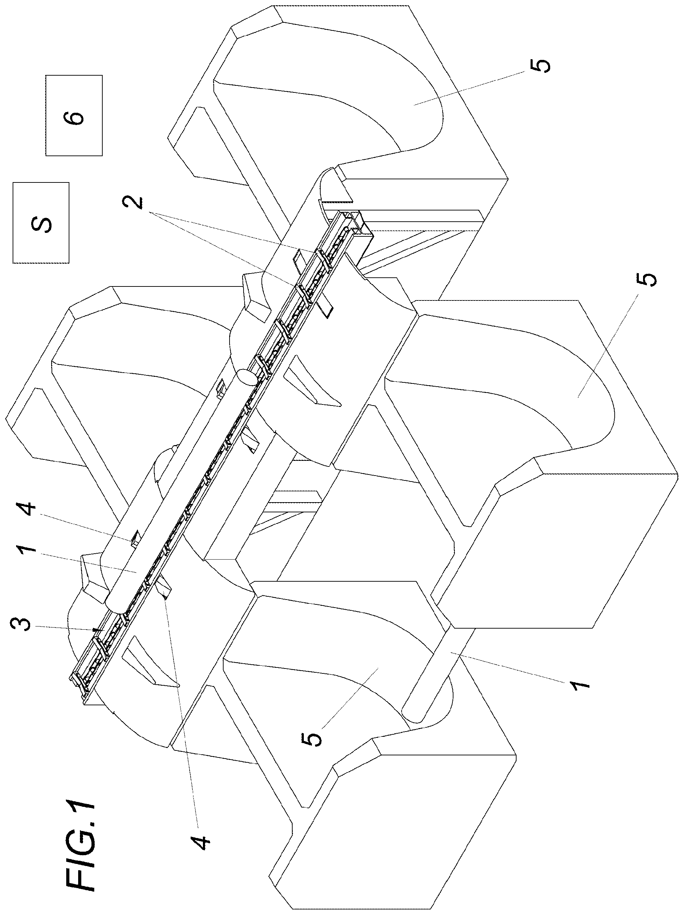

In der Zeichnung ist der Erfindungsgegenstand beispielsweise dargestellt. Es zeigen
- Fig. 1: einen Förderabschnitt einer erfindungsgemäßen Vorrichtung in Schrägansicht,

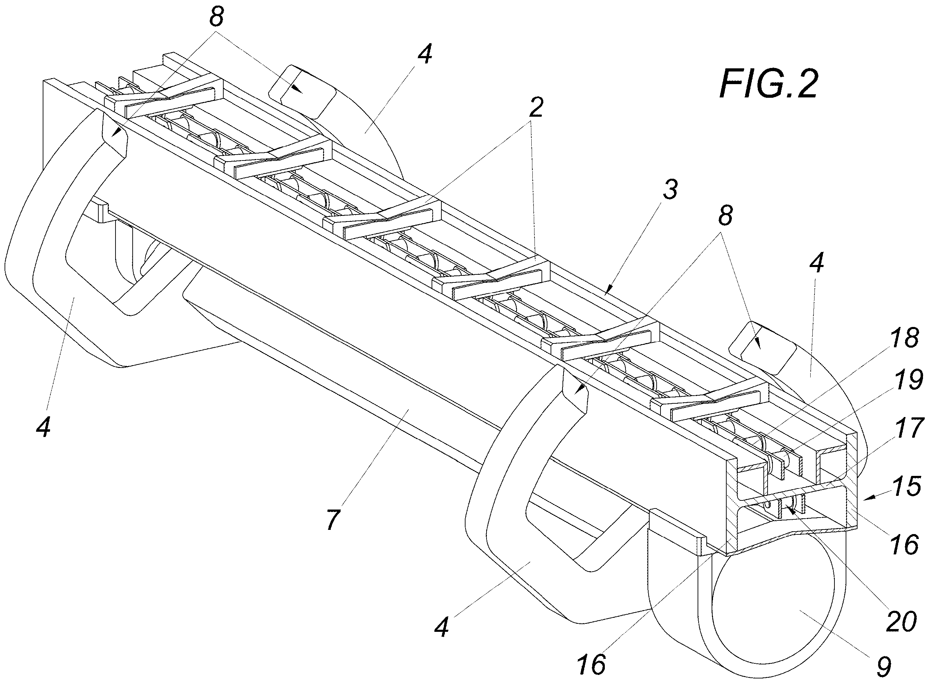

- Fig. 2: einen vergrößerten Teil der Fördereinrichtung aus Fig. 1 in Schrägansicht mit entfernten Abwurfführungen,

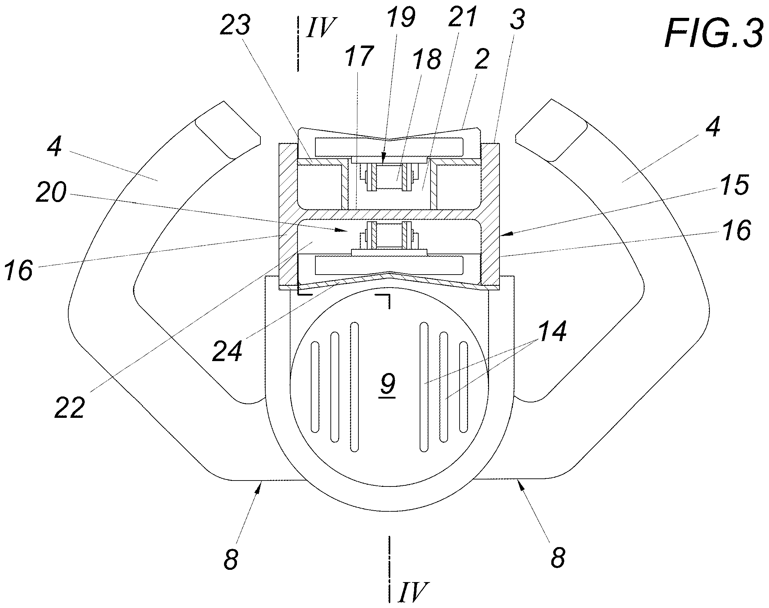

- Fig. 3: eine erfindungsgemäße Vorrichtung im Querschnitt und
- Fig. 4: die Vorrichtung im Längsschnitt nach der Linie IV-IV aus der Fig. 3.

### Wege zur Ausführung der Erfindung

Die erfindungsgemäße Vorrichtung zum Sortieren von Stämmen 1, insbesondere Rundholzstämmen, weist unter anderem eine Mitnehmer 2 aufweisende, Fördereinrichtung 3 sowie entlang der Fördereinrichtung 3 angeordnete Ausstoßer 4 zum gezielten Abwurf von Stämmen 1 von der Fördereinrichtung 3 in Rundholzmagazine 5 auf. Der Abwurf in die Rundholzmagazine 5 erfolgt in Abhängigkeit von Signalen einer übergeordneten Steuerung 6, wobei je wenigstens zwei mittels einer Achse 7 untereinander antriebsverbundenen Ausstoßerpaaren 8 ein gemeinsamer Drehantrieb 9 zugehört.

Der Drehantrieb 9 ist ein Torquemotor, dessen Rotor 10 unmittelbar starr mit der Achse 7 verbunden ist und dessen Stator 11 bezüglich der Fördereinrichtung 3 drehfest angeordnet ist. Der Rotor 10 ist direkt auf einen Achsstummel der Achse 7 spielfrei, also starr und unmittelbar, aufgeschrumpft und in einem Gehäuse 13 gelagert, das den Stator 11 aufnimmt. Somit sind sämtliche, möglichen Ungenauigkeitsverursacher ausgeschaltet und wird ein höchst dynamisches und exaktestes System geschaffen, das den Anforderungen eines präzisen, wiederholgenauen Abwurfes gerecht wird und eine Hochgeschwindigkeitssortierung ermöglicht sowie auf Grund seiner Einfachheit noch dazu eine lange Lebensdauer und geringen Wartungsaufwand gepaart mit störungsfreier Funktion sicherstellt.

Zur Bestimmung der Rotordrehlage gehört dem Torquemotor ein den Drehwinkel zwischen Rotor 10 und Stator 11 messender Drehwinkelsensor 12 zu. Der Innenraum eines Gehäuses 13 des Torquemotors ist zur Schmierung und Temperierung mit einem Fluid, insbesondere mit einem Trafoöl, gefüllt. Zudem ist das Gehäuse 13 zur Kühlung mit Kühlrippen 14 ausgestattet.

Zur Bestimmung einer Stammposition auf der Fördereinrichtung 3 gehört der Fördereinrichtung 3 wenigstens ein in der Zeichnung angedeuteter Positionssensor S zu, der an geeigneter Stelle zu positionieren ist. Üblicherweise wird ein derartiger Positionssensor S, beispielsweise eine Lichtschranke, im Bereich des Fördereinrichtungsanfanges vor den Ausstoßzonen vorgesehen werden.

Die Fördereinrichtung 3 umfasst einen liegenden I-Träger 15 mit einem zwei Gurte 16 verbindenden Verbindungssteg 17 und eine die Mitnehmer 2 tragende Förderkette 18, wobei Vorlauf 19 und Rücklauf 20 der Förderkette 18 oberhalb des Drehantriebes 9 angeordnet sind.

Der Vorlauf 19 und der Rücklauf 20 der Förderkette 18 sind in einem von den Gurten 16 aufgespannten Raum geführt, wobei der Vorlauf 19 auf einer Seite in einem Vorlaufraum 21 und der Rücklauf 20 auf der anderen Seite des Verbindungssteges 17 in einem Rücklaufraum 22 geführt ist. Der Vorlaufraum 21 ist seitlich der Förderkette 18 mit Führungsschienen für die Mitnehmer 2 bildenden Profilen 23 ausgestattet ist. Die Führungsschienen sind einerends an einen Gurt und anderends an den Steg angesetzte Winkelprofile. Der Rücklaufraum 22 ist mit einer zwischen den Gurten 16 angeordneten Gleitführung 24 für die Mitnehmer 2 abgeschlossen. Die Gleitführung 24 wird von einem firstblechartigen Blechprofil gebildet, das randseitig an den Gurten befestigt ist und in den Rücklaufraum 22 vorragt.

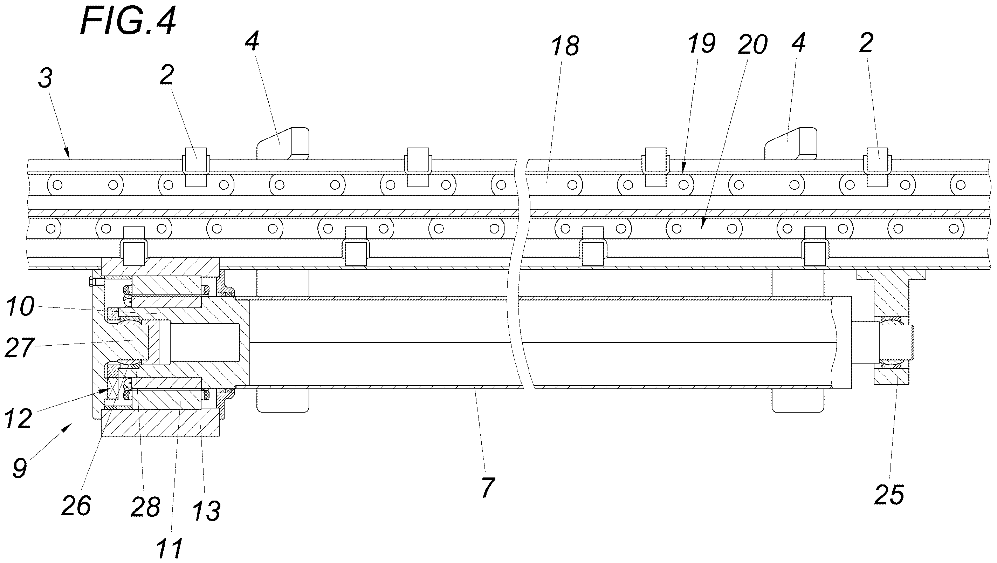

Die Ausstoßer 4 sind mit dem Drehantrieb 9 an der Fördereinrichtung 3, im Ausführungsbeispiel am I-Träger 15, gelagert, wobei einerends der Achse 7 der Torquemotor und anderends der Achse 7 ein Lagerbock 25, in dem die Achse 7 gelagert ist, an der Fördereinrichtung 3 befestigt ist. Der Torquemotor und die Achse 7 bilden somit eine gemeinsam Querkräfte aufnehmende Baugruppe, die einerends im Gehäuse 13 und anderends im Lagerbock 25 gelagert ist. Wie Fig. 4 entnommen werden kann, ist der Rotor 10 des Torquemotors antriebsseitig direkt an den unverminderten Torsionsquerschnitt der Achse 7 angeflanscht, womit keine Schwächung des Drehantriebs durch Querschnittsreduktion im Antriebsstrang gegeben ist. Die motorseitige Lagerung des Rotors 10 und damit der Achse 7 erfolgt über ein Zapfenlager 26, das zwischen einem gehäusefesten Zapfen 27 und einer rotorinnenumfangsseitigen Lageraufnahme 28 des Rotors 10 angeordnet ist.

Über eine, der erfindungsgemäßen Vorrichtung vorgelagerte, in der Zeichnung nicht dargestellte Rundholzaufbereitung werden die Stämme vermessen und in Abhängigkeit der Messergebnisse bestimmt, in welches Rundholzmagazin 5 ein Stamm 1 abzulegen ist. Es wird also für jeden Stamm eine Abwurfadresse bestimmt.

Darüber hinaus wird der Abwurfzeitpunkt in Abhängigkeit der Fördergeschwindigkeit bzw. Wegposition der Stämme auf eine 1/1000s genau berechnet, um damit den funktionsrichtigen und wiederholgenauen Abwurf in das jeweilige Rundholzmagazin 5 sicherzustellen. Der genaue Abwurf wird durch die Ausstoßer 4 und den erfindungsgegenständlichen Drehantrieb 9 gewährleistet, der eine exakte Schwenkbewegung zum richtigen Zeitpunkt, mit der richtigen Geschwindigkeit und der richtigen Größe (ca.45°Schwenkbewegung) ausführt und anschließend innerhalb eines gestatteten Zeitfensters wieder zurück in die Nullposition verlagert wird.

## Patentansprüche

1. Vorrichtung zum Sortieren von Stämmen (1), nämlich Rundholzstämmen, mit einer, Mitnehmer (2) aufweisenden, Fördereinrichtung (3) sowie mit entlang der Fördereinrichtung (3) angeordneten Ausstoßern (4) zum gezielten Abwurf von der Fördereinrichtung (3) in Rundholzmagazine (5) in Abhängigkeit von Signalen einer übergeordneten Steuerung (6), wobei je wenigstens zwei mittels einer Achse (7) untereinander antriebsverbundenen Ausstoßerpaaren (8) ein gemeinsamer Drehantrieb (9) zugehört, wobei die Ausstoßer (4) mit dem Drehantrieb (9) an der Fördereinrichtung (3) angeordnet sind,
**dadurch gekennzeichnet, dass** der Drehantrieb (9) ein Torquemotor ist, dessen Rotor (10) unmittelbar starr mit der Achse (7) verbunden ist und dessen Stator (11) bezüglich der Fördereinrichtung (3) drehfest angeordnet ist, und dadurch, dass der Rotor (10) des Torquemotors antriebsseitig direkt an den unverminderten Torsionsquerschnitt der Achse (7) angeflanscht ist, wobei die motorseitige Lagerung des Rotors (10) und damit der Achse (7) vorzugsweise über ein Zapfenlager (26) erfolgt, das zwischen einem gehäusefesten Zapfen (27) und einer rotorinnenumfangsseitigen Lageraufnahme (28) des Rotors (10) angeordnet ist, und wobei insbesondere einerends der Achse (7) der Torquemotor und anderends der Achse (7) ein Lagerbock (25) an der Fördereinrichtung (3) befestigt ist.

2. Vorrichtung nach Anspruch 1, **dadurch gekennzeichnet, dass** dem Torquemotor zur Bestimmung der Rotordrehlage ein den Drehwinkel zwischen Rotor (10) und Stator (11) messender Drehwinkelsensor (12) zugehört.

3. Vorrichtung nach Anspruch 1 oder 2, **dadurch gekennzeichnet, dass** ein Innenraum eines Gehäuses (13) des Torquemotors zur Schmierung und zur Wärmeableitung mit einem elektrisch isolierenden Fluid gefüllt ist.

4. Vorrichtung nach Anspruch 3, **dadurch gekennzeichnet, dass** das Gehäuse (13) zur Kühlung mit Kühlrippen (14) ausgestattet ist.

5. Vorrichtung nach einem der Ansprüche 1 bis 5, **dadurch gekennzeichnet, dass** die Fördereinrichtung (3) einen liegenden I-Träger (15) mit einem zwei Gurte (16) verbindenden Verbindungssteg (17) und eine die Mitnehmer (2) tragende Förderkette (18) umfasst, wobei Vorlauf (19) und Rücklauf (20) der Förderkette (18) oberhalb des Drehantriebes (9) angeordnet sind.

6. Vorrichtung nach Anspruch 5, **dadurch gekennzeichnet, dass** Vorlauf (19) und Rücklauf (20) der Förderkette (18) in einem von den Gurten (16) aufgespannten Raum geführt sind, wobei der Vorlauf (19) auf einer Seite in einem Vorlaufraum (21) und der Rücklauf (20) auf der anderen Seite des Verbindungssteges (17) in einem Rücklaufraum (22) geführt ist.

7. Vorrichtung nach Anspruch 6, **dadurch gekennzeichnet, dass** der Vorlaufraum (21) seitlich der Förderkette (18) mit Führungsschienen für die Mitnehmer (2) bildenden Profilen (23) ausgestattet ist.

8. Vorrichtung nach Anspruch 6 oder 7, **dadurch gekennzeichnet, dass** der Rücklaufraum (22) mit einer zwischen den Gurten (16) angeordneten Gleitführung (24) für die Mitnehmer (2) abgeschlossen ist.

## Claims

1. Device for sorting trunks (1), in particular logs, comprising a conveyor device (3) having carriers (2) and ejectors (4), which are arranged along the conveyor device (3), for a controlled discharge from the conveyor device (3) into log magazines (5) as a function of signals from a superordinate controller (6), with a common rotary drive (9) belonging to each of at least two pairs of ejectors (8) which are drive-connected to one another by means of an axle (7), wherein the ejectors (4) are arranged at the conveyor device (3) together with the rotary drive (9), **characterized in that** the rotary drive (9) is a torque motor whose rotor (10) is directly rigidly connected to the axle (7) and whose stator (11) is arranged in a rotationally fixed manner with respect to the conveyor device (3) and **in that** the rotor (10) of the torque motor is flanged directly to the undiminished torsional cross-section of the axle (7) on the drive side, wherein the motor-side bearing of the rotor (10) and thus of the axle (7) is preferably effected by means of a journal bearing (26) which is arranged between a journal (27) fixed to the housing and a bearing receptacle (28) of the rotor (10) on the rotor inner circumference side and wherein in particular at one end of the axle (7) the torque motor and at the other end of the axle (7) a bearing block (25) is fastened to the conveyor device (3).

2. Device according to claim 1, **characterized in that** a rotation angle sensor (12) measuring the rotation angle between rotor (10) and stator (11) is associated with the torque motor for determining the rotor rotation position.

3. Device according to claim 1 or 2, **characterized in that** an interior of a housing (13) of the torque motor is filled with an electrically insulating fluid for lubrication and heat dissipation.

4. Device according to claim 3, **characterized in that** the housing (13) is equipped with cooling fins (14) for cooling.

5. Device according to one of claims 1 to 5, **characterized in that** the conveyor device (3) comprises a horizontal I-beam (15) with a connecting web (17) connecting two belts (16) and a conveyor chain (18) carrying the carriers (2), wherein the forward run (19) and return run (20) of the conveyor chain (18) are arranged above the rotary drive (9).

6. Device according to claim 5, **characterized in that** the forward run (19) and return run (20) of the conveyor chain (18) are guided in a space spanned by the belts (16), wherein the forward run (19) is guided on one side in a forward run space (21) and the return run (20) is guided on the other side of the connecting web (17) in a return run space (22).

7. Device according to claim 6, **characterized in that** the forward run space (21) is provided laterally of the conveyor chain (18) with guide rails for profiles (23) forming the carriers (2).

8. Device according to claim 6 or 7, **characterized in that** the return run space (22) is closed off with a sliding guide (24) for the carriers (2) arranged between the belts (16).

## Revendications

1. Dispositif destiné à trier des troncs (1), à savoir des rondins, comprenant une installation de transport (3) présentant des moyens d'entraînement (2) ainsi que des moyens d'éjection (4) disposés le long de l'installation de transport (3) pour le déchargement de manière ciblée de l'installation de transport (3) dans des chargeurs de rondins (5) en fonction de signaux d'une commande supérieure (6), dans lequel un entraînement rotatif commun (9) appartient à chaque fois à au moins deux paires de moyens d'éjection (8) reliées en entraînement l'une à l'autre à l'aide d'un axe (7), dans lequel les moyens d'éjection (4) sont disposés avec l'entraînement rotatif (9) sur l'installation de transport (3), **caractérisé en ce que** l'entraînement rotatif (9) est un moteur de couple dont le rotor (10) est directement relié à l'axe (7) de manière rigide et dont le stator (11) est disposé de manière solidaire en rotation par rapport à l'installation de transport (3), et **en ce que** le rotor (10) du moteur de couple est bridé côté entraînement directement sur la section de torsion de même intensité de l'axe (7), dans lequel le montage du rotor (10) et donc de l'axe (7) côté moteur s'effectue de préférence par le biais d'un palier à tourillon (26) qui est disposé entre un tourillon (27) fixé au boîtier et un logement de palier (28) du rotor (10) du côté de la circonférence intérieure du rotor et dans lequel en particulier le moteur de couple est fixé à une extrémité de l'axe (7) et un support de palier (25) est fixé à l'installation de transport (3) à l'autre extrémité de l'axe (7).

2. Dispositif selon la revendication 1, **caractérisé en ce qu'**un capteur d'angle de rotation (12) mesurant l'angle de rotation entre le rotor (10) et le stator (11) appartient au moteur de couple pour définir la position de rotation du rotor.

3. Dispositif selon la revendication 1 ou 2, **caractérisé en ce qu'**un espace intérieur d'un boîtier (13) du moteur de couple est rempli d'un fluide électriquement isolant pour la lubrification et la dissipation thermique.

4. Dispositif selon la revendication 3, **caractérisé en ce que** le boîtier (13) est équipé d'ailettes de refroidissement (14) pour le refroidissement.

5. Dispositif selon une des revendications 1 à 5, **caractérisé en ce que** l'installation de transport (3) comprend une potence en I couchée (15) avec une âme de liaison (17) reliant deux courroies (16) et une chaîne de transport (18) portant les moyens d'entraînement (2), dans lequel le mouvement en avant (19) et le mouvement de retour (20) de la chaîne de transport (18) sont disposés au-dessus de l'entraînement rotatif (9).

6. Dispositif selon la revendication 5, **caractérisé en ce que** le mouvement en avant (19) et le mouvement de retour (20) de la chaîne de transport (18) sont guidés dans un espace tendu par les courroies (16), dans lequel le mouvement en avant (19) est guidé d'un côté dans un espace d'avancement (21) et le mouvement de retour (20) est guidé de l'autre côté de l'âme de liaison (17) dans un espace de retour (22).

7. Dispositif selon la revendication 6, **caractérisé en ce que** l'espace d'avancement (21) est équipé de manière latérale à la chaîne de transport (18) avec des rais de guidage pour des profilés (23) formant les moyens d'entrainement (2).

8. Dispositif selon la revendication 6 ou 7, **caractérisé en ce que** l'espace de retour (22) est fermé par un guidage coulissant (24) disposé entre les courroies (16) pour les moyens d'entraînement (2).
